Europäisches Patentamt

European Patent Office

Office européen des brevets

(11) Publication number: **0 429 924 A2**

# (12) EUROPEAN PATENT APPLICATION

(21) Application number: **90121501.2**

(22) Date of filing: **09.11.90**

(51) Int. Cl.⁵: **G10L 5/06**

(30) Priority: **30.11.89 JP 311756/89**

(43) Date of publication of application:
**05.06.91 Bulletin 91/23**

(84) Designated Contracting States:
**BE DE FR GB IT NL SE Bulletin 00/1**

(71) Applicant: **YOZAN INC.**
**2-22-2, Koishikawa, Bunkyo-ku**
**Tokyo 112(JP)**

(72) Inventor: **Takatori, Sunao, c/o Yozan Inc.**
**2-22-2, Koishikawa Bunkyo-ku**
**Tokyo 112(JP)**

Inventor: **Kumagai, Ryohei, c/o Yozan Inc.**
**2-22-2, Koishikawa Bunkyo-ku**
**Tokyo 112(JP)**
Inventor: **Matsumoto, Koji, c/o Yozan Inc.**
**2-22-2, Koishikawa Bunkyo-ku**
**Tokyo 112(JP)**
Inventor: **Yamamoto, Makoto, c/o Yozan Inc.**
**2-22-2, Koishikawa Bunkyo-ku**
**Tokyo 112(JP)**

(74) Representative: **Patentanwälte Grünecker,**
**Kinkeldey, Stockmair & Partner**
**Maximilianstrasse 58**
**W-8000 München 22(DE)**

(54) **Acoustic recognition method.**

(57) An acoustic recognition method including step of phoneme segmentation. characterized in that: the phoneme segmentaticn step comprises a step of concavity calculation step for calculating depth of concavities of acoustic power sequence so as to find an acoustic boundary.

Fig. 1

EP 0 429 924 A2

## ACOUSTIC RECOGNITION METHOD

### FIELD OF THE INVENTION

The present invention relates to an acoustic recognition method.

### BACKGROUND OF THE INVENTION

Conventionally, there is a method to analyze frequency of each phoneme after segmentation of phonetic phenomenon into phonemes. It has been tried for segmentation that extraction of the level of acoustic power is executed first, and an acoustic power sequence is divided with boundaries where the acoustic level is lower than a predetermined level.

### SUMMARY OF THE INVENTION

However, acoustic power level is not always lowered down to a level lower than the predetermined level. There is a case that acoustic power is totally lowered. Therefore, it is difficult to divide acoustic power sequence into phonemes according only to decrease of power level.

The present invention has an object to provide an acoustic recognition method with high recognition performance due to accurate segmentation of acoustic power sequence.

The acoustic recognition method according to the present invention performs phoneme segmentation through concavity calculation of acoustic power sequence.

### BRIEF DESCRIPTION OF THE DRAWINGS

Fig. 1 shows the first embodiment of acoustic recognition system according to the present invention.

Fig. 2 shows a block diagram of characteristics processing portion in the first embodiment.

Fig. 3 shows a block diagram of associative portion in the first embodiment.

Fig. 4 shows a block diagram of quantizing portion in associative portion.

### PREFERRED EMBODIMENT OF THE PRESENT INVENTION

Hereinafter, an embodiment of the acoustic recognition method is described with referring to the attached drawings.

The acoustic recognition method in the first embodiment of the present invention performs the steps of segmentation and frequency analysis. The following is the contents of them.

(1) Division Step

The processings from i) to v) are performed in segmentation steps.

i) Storage of sequential logarithmic power into memory;

This is performed to take a decibel of an acoustic power.

ii) Smoothing for sequential power;

The data obtained in i) may include power drops and peaks caused by noises. Therefore, smoothing is performed to simplify the process after it, and small concavities and convexities of acoustic signal are reduced.

iii) Extracting concavities in sequential power;

The contour of an figure can be expressed by direction codes. Envelope curve is extracted by examining the inclination from the candidate of top point of peripheral length of envelope curve toward boundary pixels. A concavity is extracted by examining the distance from theoretical line connecting adjacent 2 points on peripheral length of envelope curve to a boundary pixel. The distance is obtained by calculating direction codes. As the power sequence has been already smoothed, the concavity with deeper depth than a certain one is usually the boundary of a phoneme.

iv) Extracting middle point on chord of each concavity;

The middle point on a chord of each concavity is extracted as a boundary of phonemes. This middle point is defined as "boundary", hereinafter.

v) Division on each middle point of power sequence;

Power sequence is divided into phonemes by the processing of iv). The segmentation is executed by registering the indicator point of original data, for example.

(2) Frequency Analysis Step

The next processings from i) to vi) are performed on frequency analysis step.

i) Calculating histogram of logarithmic power;

Acoustic signal usually comprises phonemes and noises. Acoustic signal of phoneme has to be extracted for frequency analysis. Phoneme signal is extracted by performing threshold processing because the power level of noise is lower than that of phoneme. The threshold processing is performed by the most appropriate threshold. Threshold is changed into the most appropriate one in the same way of image processing, such as "mode method" and "discriminating analysis method".

In the present embodiment, histogram is calculated for optimizing the threshold one in the same way of "mode method".

ii) Calculating the optimized threshold of power sequence;

Here, the optimized threshold is calculated by "mode method". In this method, densities are rearranged in the order of the number of pixels at first in the case of image processing. On analyzing acoustic phenomenon, the number of power levels are rearranged according to the frequency of the level generation. On rearranged table, the most appropriate threshold is calculated as Nb which makes the value of the following formula maximum.

$$(Na-Nb) \times (Nc-Nb)$$

where, Na and Nc are the maximum of power frequency, and Nb is the minimum of it.

iii) Binarizing sequential power;

Sequential power is binalized using the optimized threshold calculated in ii)

iv) Accumulation of binarized power sequence;

Binarized power sequence is accumulated as time. The accumulation on the time T1 is equal to the accumulation of binarized power from the beginning of the time T1.

v) Differential calculus of accumulated power sequence;

The accumulated value in the memory is differentiated: the frequency on each time is calculated therethrough.

vi) Output of the matrix of differential value on each phoneme

A matrix of differential value is outputted on each phoneme obtained in (1)-v). The differential value of the accumulated power sequence corresponds to the frequency of the phoneme.

The frequency of a phoneme and the data of a power obtained in this way are compared with, for example, the pattern settle by DP matching beforehand: it is possible to recognize acoustic phenomenon by it. But it is difficult to recognize acoustic phenomenon rapidly and accurately because the number of patterns is many by such a method and application of rule for matching is complicated. In the present embodiment, therefore, acoustic recognition is performed in higher speed and more accurately using the circuit described below.

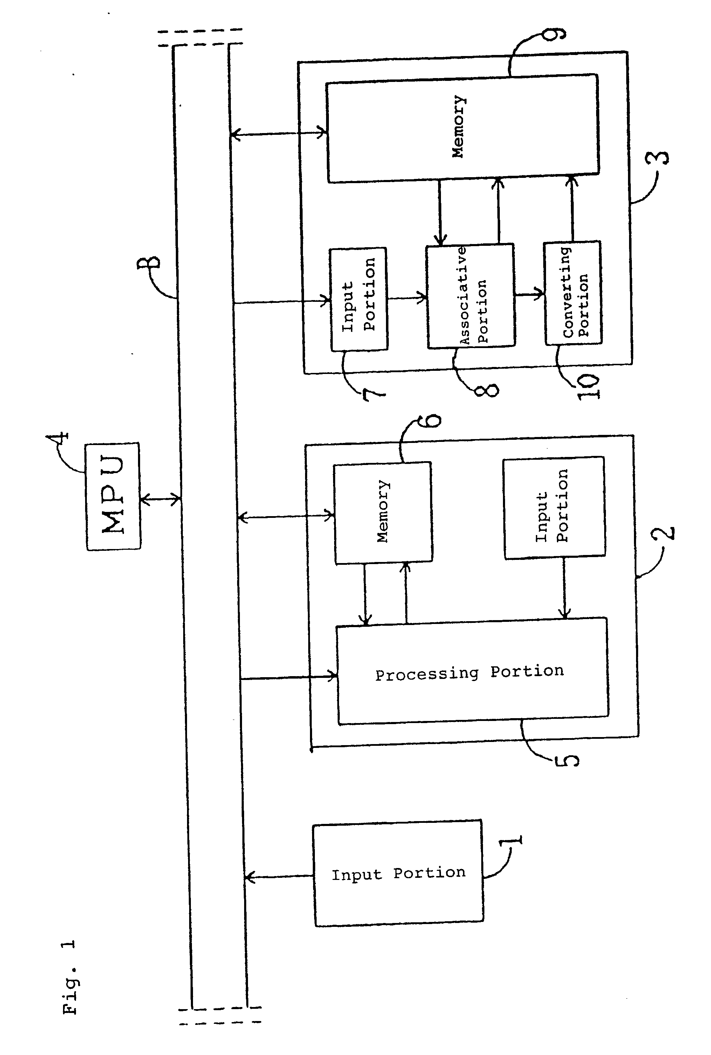

Fig. 1 shows the brief structure of acoustic recognition system. This acoustic recognition system comprises input portion 1 generating digital data pattern corresponding to input vocal sound, characteristic processing portion 2 and recognition portion 3, which are connected to each other through bus B, and simultaneously connected to MPU4. Input portion 1 comprises input apparatus such as microphone etc. and I/O which comprises memory etc. for compressing and holding data. Characteristics processing portion 2 comprises processing portion 5 to extract characteristic and memory 6 to hold digital data patterns generated in the input portion: input portion 1 is settled as the necessity. Recognition portion 3 comprises input portion 7 to be inputted data of extracted characteristics of vocal sound to be recognized, associative portion 8 for performing association according to the data through input pattern, and converting portion 10 designating address of memory 9 registered memories according to the output of associative portion 8.

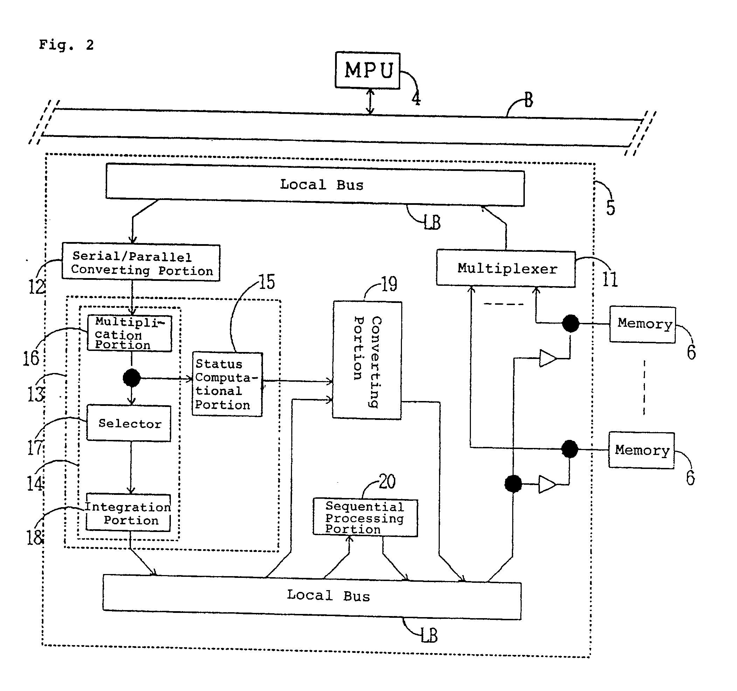

Fig. 2 shows processing portion 5 in characteristics processing portion 2. Processing portion 5 transmits the data inputted selectively from memory 6 by way of multiplexer 11 to serial/parallel converting portion 12 through local bus LB. Converting portion 12 holds data by the unit of a predetermined bytes (for example, twenty or thirty bytes) and inputs it to computational portion 13 parallelly. Computational portion 13 comprises numerical computational portion 14 and status computational portion 15. The output of serial/parallel converting portion 12 is inputted to numerical computational portion 14.

Numerical computational portion 14 consists of multiplication portion 16, selector 17 and integration portion 18 connected in sequence. It performs operation such as differential etc. and computation between images. A processing is performed as numerical computation, for example, after multiplying the multipliers to sampling frequency, integrate them numerically. Multiplication portion 16 is settled in the first step in numerical computational portion 14 according to the inventors' knowledge that the same data is never multiplied the multipliers with different absolute values. By the arrangement, the number of kernels (the number of sets of a circuit for multiplication) can equal to be the number of data to be processed simultaneously, that is, the minimum. Furthermore, the number of gates of selector in the next step and of integration portion decrease. Consequently, numerical computational portion can possess the maximum function with small circuit, and the processing speed can be higher.

The data in numerical computational portion 14 is lead to status computational portion 15 which executes the judgment or computational as follows.

a) Effective characteristics for segment, such as steep change of power

b) Effective characteristics for extracting central frame of vocal sound, such as frequency, maximum of power, and so on.

c) Others

Since the numerical and status computations are performed parallelly in the independent circuits from each other, process becomes high in efficiency and process speed. The output of status computational portion 15 is effective characteristics value itself, or effective data for extracting characteristics value.

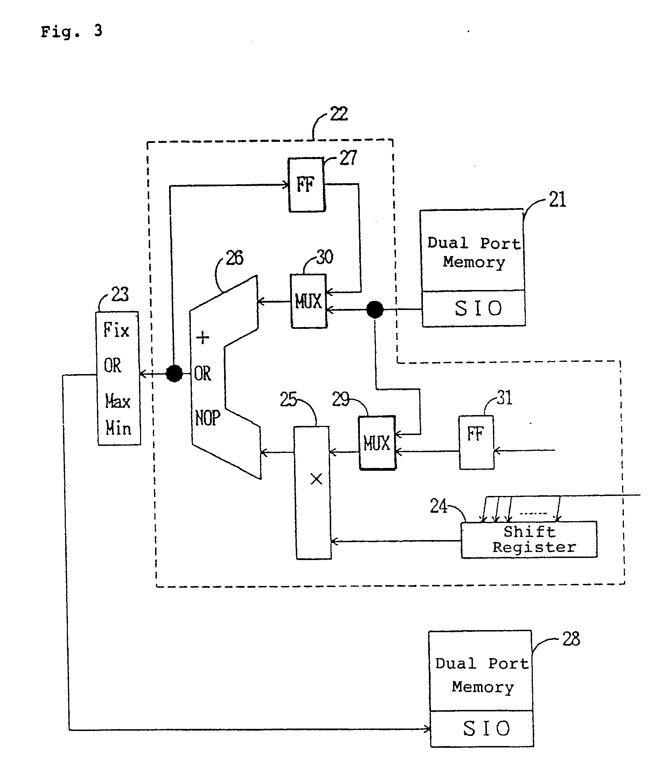

Characteristics value is calculated in the converting portion 19 from the output of status computational portion 15 through extracting characteristics, accumulation, comparison and so on. Converting portion 19 consists of a light computational portion such as full adder connected to an output of a high speed memory such as static RAM, and the output of the light computational portion is fed back to the data input of high speed memory. It is possible to execute the same computation to the same data repeatedly, and complicated computation can be performed such as data accumulation, successive comparison of data, and so on by a small circuit in high speed. The outputs of computational portion 13 and converting portion 19 are returned to one of memory 6s through local bus LB on output side. Sequential processing portion 20 is connected also to local bus LB on output side. Feed back type sequential processing is performed in the sequential processing portion 20. Sequential processing portion 20 comprises line memory, ratch and logic portion. Sequential processing is performed with referring to the data processed a certain period of time before the data to be processed. In such processing portion, various kinds of characteristics value can be calculated in high speed, and it is possible to supply significant characteristics value to recognition portion 3. When dual port memory is adopted as memory 6, reading out and writing data can be performed in exceedingly high speed. The circuit in Fig. 3, for example, is adopted as associative portion 8 in recognition portion 3. The matrix computation below for memory matrix is performed.

$$Z = My$$
$$M = xx'$$

where,

x : memory (vertical vector)
x': transposed matrix of x
M : memory matrix
y : transposed matrix of input (vertical vector)
0: quantizing function (convert each element in matrix to 1, 0 and -1 when it is plus, 0 and minus, respectively)
Z: association (vertical vector)

Recognition portion 3 comprises dual port memory. To serial I/O in dual port memory 21 (it is shown with "SIO" in the figure, associative portion or matrix computational portion 22 is connected. The output of matrix computational portion 22 is connected to quantizing portion 23.

In dual port memory 21, n x n matrix is registered according to the arrangement of the matrix; the matrix is composed of the vector to show the memory (assumed to be n rows) and the product between the vector and its transposed matrix. The matrix is read out by 1 line in serial I/O (SIO). The data read out in SIO is outputted 1 to each clock. The speed of reading out is high.

Matrix computational portion 22 comprises associative input portion 24 holding the whole input pattern, with n rows of vector. The associative input portion 24 is composed of shiftregister, for example. The input pattern held in input portion 24 and the data to be outputted from SIO are multiplied by every element in multiplication portion 25. The multiplication result is added to the cumulus so far of multiplication result in addition portion 26. The cumulus of multiplication result is stored in holding portion 27.

When the cumulus of the product between input pattern as

$$M \times y'$$

is calculated, the value is inputted to quantizing portion 23.

In quantizing portion 23, each element of

$$M \times y'$$

is converted into 1, 0 or -1 when it is plus, 0 or minus, respectively. The result is stored in the second dual port memory 28.

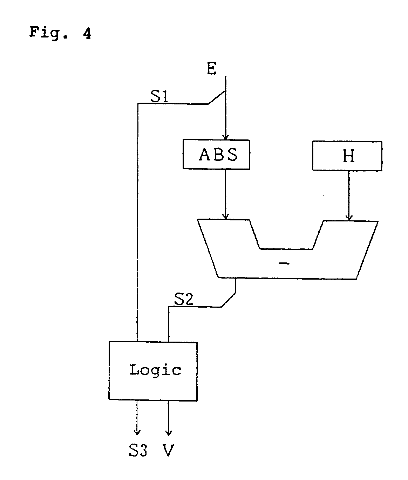

Quantizing portion 3 is constructed as in Fig. 4, for example. Comparing the absolute value of element E to threshold H, the sign flag S2 is outputted. Absolute value V of quantized value and the sign flag S3 is outputted by the following theory from sign flag S1 and S2 of element E.

$$S3 = S1 \times S2$$
$$V = S2$$

The truth table of them is as below.

**Table**

| | | | | |
|---|---|---|---|---|
| S1 | 0 | 0 | 1 | 1 |
| S2 | 0 | 1 | 0 | 1 |
| S3 | 0 | 0 | 1 | 0 |
| V | 1 | 0 | 1 | 0 |

The characteristics value obtained in the characteristics processing portion 2 is inputted as an input pattern. Assuming that input pattern is 1K bytes, it becomes the vertical vector of 1,000 rows as a whole. The matrix is composed of 1,000 x 1,000of memory matrix and 1,000,000 of elements.

When read out cycle in dual port memory is 40nsec., it is possible to read out memory matrix in the time as below.

40 × 10 × 1,000,000 = 40msec.

When pipe-line processing is adopted between each block, whole processing can be executed in higher speed. Processing result can be stored in the first dual port memory 21 by omitting the second dual port memory 28.

Matrix computational portion 22 comprises the elements for learning. The elements for learning and association are selected in multiplexer or so.

Multiplexer 29 connected to multiplication portion 25, to select SIO and input pattern for learning. Multiplexer 30 is connected to adding portion 26, to select the output of SIO and the output of holding portion 27.

Input pattern for learning is the product between input pattern and the transposed matrix. What is multiplied by one of all the elements of vectors hold in shift register 24 is added. Holding portion 31 is settled to hold the one element.

The input pattern constructed in this way is added to memory matrix M by one line in addition portion 26.

It is possible to change the quantizing portion 23 into the function to fix the maximum. When the sum of input pattern and memory matrix exceeds the certain maximum, the sum is changed to the predetermined maximum. For example, when the each element of memory matrix to be 8 bits, there is a case that the element exceeds 255 and returns to 0 by the addition of input pattern: by limiting the maximum to be 255, such a case will not occur.

In such as recognition portion 3 of neural network type, each element in memory matrix is changed by giving teacher signals to association result. Accordingly, it is possible to educate it in order to generate the appropriate association. Therefore, it is not necessary to decide associative pattern artificially: it is possible to apply the recognition of any vocal sound within the limit of capacity. On recognition of vocal sound, user's voice can be recognized in high probability by learning the characteristics of user's voice.

In Fig. 1, data of the values of various memory matrix and the letters to be finally associated is registered in memory 9: each element of memory matrix is transmitted to dual port memory 21 of associative portion 8 in Fig. 3 when a certain association is performed. The output of associative portion 8 is to be the code number or so of vocal sound to be associated. The address of memory 9 is designated directly by code number, or designated by converting the output of associative portion 8 into code number in converting portion 10.

The structure of associative portion 8 does not adopt the embodiment above but a connection machine or others based on McCulloch and Pitts model. As it is difficult to construct the connection machine with large capacity and small size by hardware, it will be better to construct it using memory matrix.

For the characteristics processing portion 2 not only the embodiment above but also any structure with the ability to characteristics extraction oan be applied.

Referring again (1) and (2) above, it is described below that in which circuit the processings of segmentation step and frequency analysis step are executed.

(1) Segmentation Step

 i) Registration of sequential logarithmic power
  Inputting vocal sound signal to input portion 1 in real-time, it is converted to sequential logarithmic power, which is inputted to memory 6 in characteristics processing portion 2.
 ii) Smoothing of sequential power
  The data smoothed is stored in memory 6 other than the memory for the original data in order to stored the original data in order to hold it. The smoothing is performed in processing portion 5 in characteristic processing portion 2. Multiplication portion 16 multiplies "1" to vocal sound data during a certain time. Integration portion 18 calculates the mean value of multiplied data by the function of addition and subtraction.
 iii) Extracting convex of sequential power
  It is executed in MPU4.
 iv) Extracting the middle point on each chord of convex
  It is executed in MPU4.
 v) Segmentation of sequential power on the middle point

(2) Frequency Analysis Step

 i) Calculating histogram of sequential logarithmic power
  Histogram is stored in high speed memory in converting portion 19 of processing portion 5.
 ii) Calculating the most appropriate threshold of sequential power
  The most appropriate threshold is calculated in MPU4.
 iii) Binarizing sequential power
  Binarization is performed in converting portion 19 as a converting table.
 iv) Accumulating binarized sequential power
  Binarized sequential power is accumulated sequentially. This accumulation defines optical computational portion as adder and performed in converting portion 19 in processing portion 5.

The value stored in high speed memory is added to new binarized power, and stored again in high speed memory. Simultaneously, accumulated value on each time is stored in memory 6.

v) Differential of accumulated sequential power

Differential computation is performed in serial/parallel converting portion 12 and in numerical computational portion 14. Data or power within a certain time is once stored in converting portion 12. Multiplication portion 16 multiplies the certain multiplier to data on every interval. Integration portion 18 mainly performs subtraction in order to obtain differentiated values. A differentiated value is the frequency on every interval. It is stored in another than that in which original data is stored.

vi) Output of differential sequence of each phoneme

Each phoneme whose differential sequence is obtained by the segmentation in (1), v) is outputted to associative portion 8. Differentiated sequential power is outputted to processing portion 3 from memory through local bus LB.

The structure of associative portion 8 adopts not only the embodiment above but also the connection machine based on McCulloch and Pitts model. As it is difficult to construct the connection machine with large capacity and small size by the present technology of semiconductor, it will be better to construct it using memory matrix.

Characteristics processing portion 2 adopts not only the embodiment above but also any structure of the processing system for extracting a lot of characteristics values.

As mentioned above, segmentation is certainly possible of vocal sound into phonemes and to recognize it accurately.

**Claims**

1. An acoustic recognition method including step of phoneme segmentation characterized in that:

   Said phoneme segmentation step comprises a step of concavity calculation step for calculating depth of concavities of acoustic power sequence so as to find an acoustic boundary.

2. An acoustic recognition method including step of frequency analysis characterized in that:

   Said frequency analysis step comprises steps of;

   (a) Binarizing said acoustic power sequence by a threshold so as to generate a rectangle acoustic wave;

   (b) Integrating said rectangle acoustic wave so as to generate a triangle acoustio wave; and

   (c) Differentiating said triangle wave so as to calculate an inclination of said triangle wave.

Fig. 1

Fig. 2

Fig. 3

Fig. 4